# FASCICULE DE BREVET EUROPEEN

(11) **EP 3 386 862 B1**
(45) Date de publication et mention de la délivrance du brevet: **18.08.2021**
(21) Numéro de dépôt: 16819615.2
(22) Date de dépôt: 07.12.2016
(51) Int. Cl.: B64D 41/00, F01D 21/14, F03D 9/32

(54) **SYSTEME D'EOLIENNE DE SECOURS COMPRENANT UN DISPOSITIF DE BLOCAGE EN ROTATION DE LA TURBINE**
RAM-AIR-TURBINE SYSTEM UMFASSEND EINE VORRICHTUNG UM DIE DREHUNG DER TURBINE ZU BLOCKIEREN
RAM AIR TURBINE SYSTEM COMPRISING A DEVICE FOR BLOCKING THE ROTATION OF THE TURBINE

(30) Priorité: 11.12.2015 FR 1562231
(43) Date de publication de la demande: 17.10.2018
(73) Titulaire: Safran Electrical & Power, 31702 Blagnac Cedex (FR)
(72) Inventeur: POLIN, Eric, Joseph, Etienne, 31700 Blagnac (FR); GUIRAUD, Julien, 91330 Yerres (FR)
(74) Mandataire: Regimbeau
(86) Numéro de dépôt international: PCT/FR2016/053246
(87) Numéro de publication internationale: WO 2017/098148

(56) Documents cités:
- GB-A- 2 257 477
- US-A- 1 733 891
- US-A- 3 149 678
- US-A1- 2007 237 640
- US-A1- 2013 256 453
- US-A1- 2014 070 049

## Description

### DOMAINE TECHNIQUE GENERAL

La présente invention concerne un système d'éolienne de secours d'aéronef.

### ETAT DE L'ART

Il est connu d'équiper les aéronefs, notamment les avions, d'une éolienne de secours (ou « Ram Air Turbine » en terminologie anglo-saxonne) qui est utilisée comme une source d'énergie électrique de secours en cas de perte des générateurs électriques principaux de l'aéronef. Cela se produit par exemple en cas de panne simultanée des moteurs de l'aéronef. En fonctionnement, l'éolienne de secours permet de produire l'énergie électrique nécessaire aux systèmes vitaux de l'aéronef, comme par exemple le système et les actionneurs de contrôle et de commande de vol.

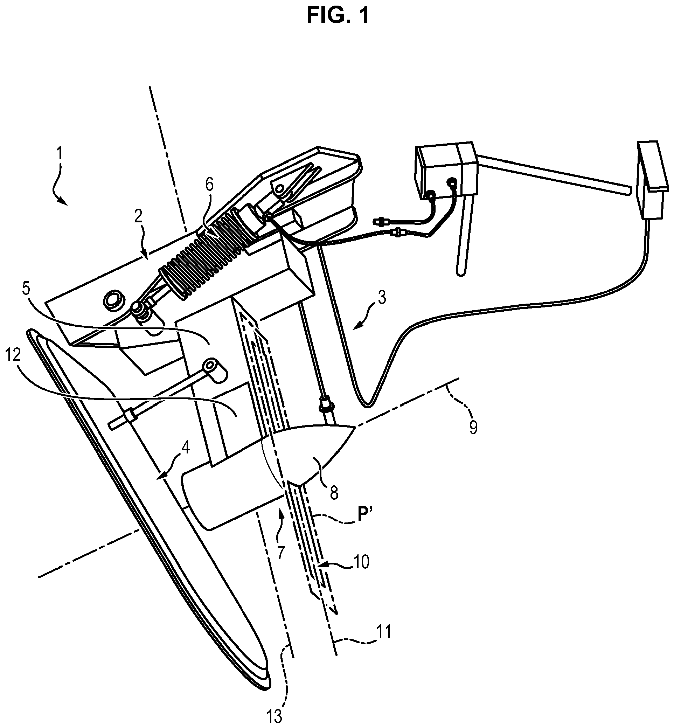

Un système d'éolienne de secours 1 d'aéronef connu de l'état de la technique est par exemple illustré à la figure 1. Un tel système comprend de manière classique une structure d'aéronef 2, une éolienne de secours 3 et une trappe 4.

Chacun des documents US 2013/256453A, US 2014/070049A, US 2007/237640A, US 1 733 891 A, GB 2 257 477 A et US 3 149 678 A concerne un système selon le préambule de la revendication 1.

L'éolienne de secours 3 comprend un mât 5 relié à la structure d'aéronef 2 via un vérin d'actionnement 6 ainsi qu'une turbine 7 comprenant un corps 8 monté en rotation sur le mât 5 autour d'un axe de rotation 9 et deux pales 10 s'étendant radialement depuis le corps 8 le long d'un même axe de pale 11. L'éolienne de secours 3 peut en outre comprendre un générateur électrique (non représenté) couplée à la turbine 7, de sorte que la rotation de la turbine 7 via les pales 10 entraîne la production d'énergie électrique par le générateur électrique. La turbine peut aussi générer de l'énergie hydraulique. L'éolienne de secours 3 se déplace par rapport à la structure d'aéronef 2, sous l'effet du vérin d'actionnement 6, entre une position rétractée dans laquelle l'éolienne de secours 3 est logée à l'intérieur du fuselage de l'aéronef et une position déployée dans laquelle l'éolienne de secours 3 s'étend à l'extérieur du fuselage de l'aéronef, à travers une ouverture (non représentée) ménagée dans le fuselage de l'aéronef.

Lorsque l'éolienne de secours 3 est en position déployée, la turbine 7 s'étend à l'extérieur du fuselage de l'aéronef et est libre en rotation autour de l'axe de rotation 9. Ainsi, dans cette position, le flux d'air extérieur entraîne en rotation la turbine 7 via les pales 10 et le générateur produit ainsi l'énergie électrique nécessaire à l'aéronef.

Lorsque l'éolienne de secours 3 est en position rétractée, il est connu de bloquer la rotation de la turbine 7 autour de l'axe de rotation 9 par l'intermédiaire d'un dispositif de blocage 12. Généralement, la turbine 7 est bloquée par le dispositif de blocage 12 de sorte que les pales 10 sont globalement alignées avec une projection orthogonale de l'axe longitudinal 13 le long duquel s'étend le mât 5 sur un plan P' perpendiculaire à l'axe de rotation 9 et dans lequel s'étend l'axe de pale 11. Une telle configuration bloquée de la turbine 7 permet de minimiser l'encombrement du système d'éolienne de secours 1 à l'intérieur du fuselage de l'aéronef.

La trappe 4 est reliée à la structure d'aéronef 2 via le vérin d'actionnement 6 et se déplace par rapport à ladite structure d'aéronef 2, sous l'effet dudit vérin d'actionnement 6, entre une position fermée dans laquelle la trappe 4 obture l'ouverture ménagée dans le fuselage de l'aéronef et l'éolienne de secours 3 est en position rétractée, et une position ouverte dans laquelle la trappe 4 libère ladite ouverture et l'éolienne de secours 3 est en position déployée. L'ouverture de la trappe 4 permet donc le déploiement de l'éolienne de secours 3 vers l'extérieur du fuselage de l'aéronef.

De manière classique, la trappe 4 s'ouvre à l'extérieur du fuselage de l'aéronef, de sorte qu'il est nécessaire de dimensionner le système d'éolienne de secours 1, notamment le vérin d'actionnement 6, en tenant compte des efforts aérodynamiques qui s'appliquent sur la trappe 4 lors de son ouverture.

Ainsi, plus la trappe 4 présente une surface importante, plus les efforts aérodynamiques qui s'appliquent sur la trappe 4 sont importants et plus le système d'éolienne de secours 1 nécessite d'être surdimensionné pour reprendre ces efforts.

Or, ce surdimensionnement entraîne un surcroît en masse qui est contraire à la volonté des avionneurs de réduire la masse des aéronefs.

Il existe donc un besoin de réduire la surface de la trappe 4 des systèmes d'éolienne de secours 1.

### PRESENTATION DE L'INVENTION

La présente invention répond à ce besoin en proposant un système d'éolienne de secours suivant la revendication 1.

Préférentiellement, le système d'éolienne de secours comprend une trappe reliée à la structure d'aéronef et configurée pour se déplacer par rapport à ladite structure d'aéronef entre une position fermée dans laquelle la trappe est destinée à obturer l'ouverture ménagée dans la surface externe et l'éolienne de secours est en position rétractée, et une position ouverte dans laquelle la trappe est destinée à libérer ladite ouverture et à s'étendre à l'extérieur de la surface externe de l'aéronef et l'éolienne de secours est en position déployée.

L'invention a également pour objet un aéronef comprenant une surface externe dans laquelle une ouverture est ménagée et un système d'éolienne de secours tel que précédemment décrit, dans lequel la structure d'aéronef est fixée à la surface externe.

La présente invention a également pour objet un procédé de blocage en rotation d'une turbine d'un système d'éolienne de secours tel que précédemment décrit suivant la revendication 4.

### PRESENTATION DES FIGURES

D'autres caractéristiques, buts et avantages de la présente invention apparaîtront à la lecture de la description détaillée qui va suivre, et en regard des dessins annexés donnés à titre d'exemples non limitatif et sur lesquels :
- la figure 1 (déjà décrite) représente une vue schématique, en perspective, d'un système d'éolienne de secours connu de l'art antérieur ;
- la figure 2 représente une vue en perspective d'un système d'éolienne de secours selon un mode de réalisation de l'invention ;
- la figure 3 représente une vue en coupe de l'éolienne de secours du système d'éolienne de secours illustré à la figure 2 ;
- la figure 4 représente une vue schématique, en perspective, de l'éolienne de secours illustrée à la figure 3, lorsque la turbine est en position bloquée ;
- la figure 5 représente une vue de détail du dispositif de blocage en rotation de la turbine de l'éolienne de secours illustrée à la figure 3.

### DESCRIPTION DETAILLEE

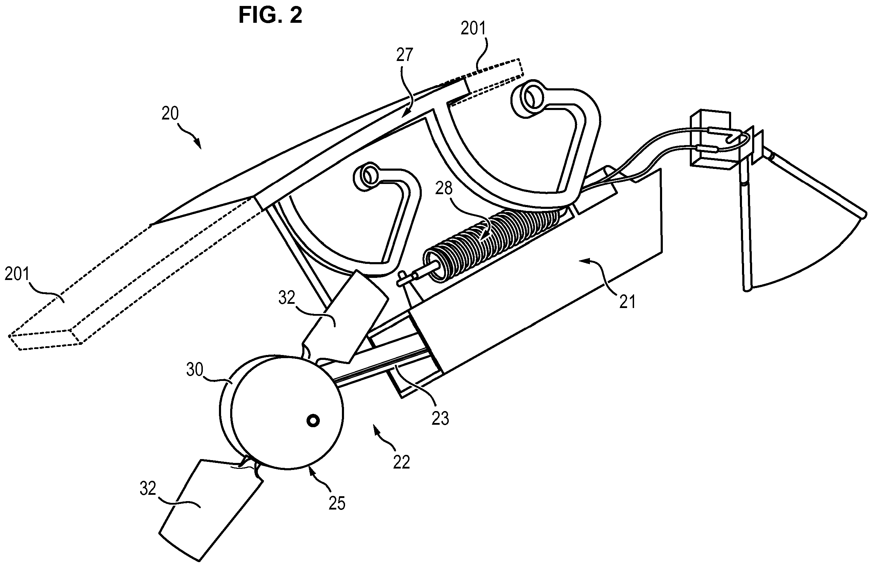

La figure 2 montre un système d'éolienne de secours 20 d'un aéronef, notamment d'un avion. L'aéronef comprend une surface externe 201 définissant la limite entre l'intérieur et l'extérieur de l'aéronef et dans laquelle une ouverture est ménagée.

La surface externe 201 de l'aéronef correspond par exemple au fuselage de l'aéronef. Dans ce cas et lorsque l'aéronef est un avion, le système d'éolienne de secours 20 est par exemple positionné au niveau du ventre mou de l'avion ou de la pointe avant de l'avion.

En variante, la surface externe 201 correspond à la voilure, au carénage ou au train d'atterrissage de l'aéronef. On entend ici par « carénage », le ou les éléments de structure fixes recouvrant les parties saillantes de l'aéronef et destinés à réduire leur résistance à l'écoulement aérodynamique. Le carénage sert notamment à recouvrir les parties qui constituent un volume externe au fuselage ou à la voilure de l'aéronef.

Le système d'éolienne de secours 20 comprend une structure d'aéronef 21 fixée à la surface externe 201, une éolienne de secours 22 (aussi appelée « Ram Air Turbine » ou « RAT » en terminologie anglo-saxonne), et une trappe 27.

L'éolienne de secours 22 est reliée à la structure d'aéronef 21 et est configurée pour se déplacer par rapport à la structure d'aéronef 21 entre une position dite rétractée dans laquelle l'éolienne de secours 22 est logée à l'intérieur de la surface externe 201 de l'aéronef et une position dite déployée dans laquelle l'éolienne de secours 22 s'étend à l'extérieur de la surface externe 201 de l'aéronef, à travers l'ouverture ménagée dans la surface externe 201. L'éolienne des secours 22 est par exemple reliée à la structure d'aéronef via un vérin d'actionnement 28 et se déplace sous l'effet de ce vérin d'actionnement 28 entre la position rétractée et la position déployée.

La trappe 27 est reliée à la structure d'aéronef 21 et est configurée pour se déplacer par rapport à la structure d'aéronef 21 entre une position dite fermée dans laquelle la trappe 27 obture l'ouverture ménagée dans la surface externe 201 de l'aéronef, et une position dite ouverte dans laquelle la trappe 27 libère l'ouverture et s'étend à l'extérieur de la surface externe 201 de l'aéronef. Lorsque la trappe 27 est en position fermée, l'éolienne de secours 22 est en position rétractée, tandis que lorsque la trappe 27 est en position ouverte, l'éolienne de secours 22 est en position déployée.

La trappe 27 est par exemple reliée à la structure d'aéronef 21 via le vérin d'actionnement 28 et se déplace sous l'effet de ce vérin d'actionnement 28 entre la position fermée et la position ouverte. La trappe 27 et l'éolienne de secours 22 se déplacent simultanément sous l'effet du vérin d'actionnement 28. Plus précisément, le système d'éolienne de secours 20 comprend une bielle qui relie la trappe 27 à un mât 23 de l'éolienne de secours 22, de sorte que lorsque le vérin d'actionnement 28 déplace le mât 23 de l'éolienne de secours 22, il déplace également la trappe 27 via la bielle.

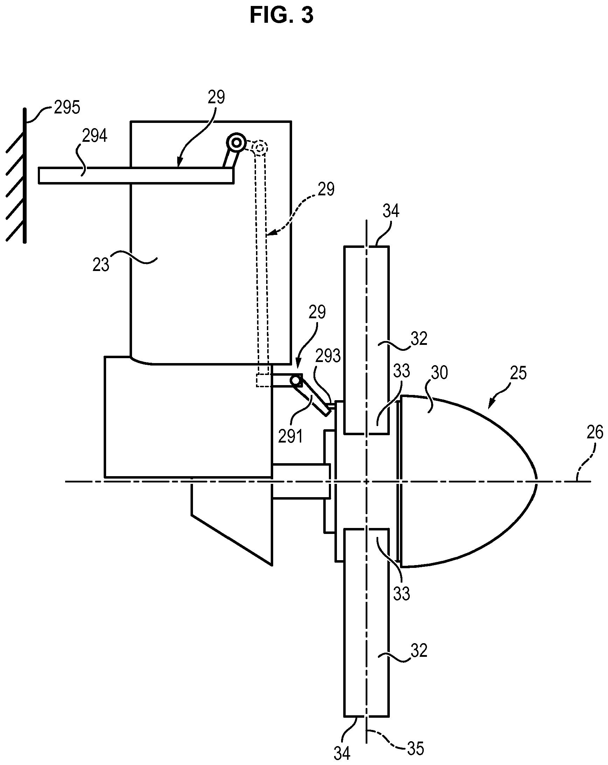

La figure 3 montre plus en détail l'éolienne de secours 22. L'éolienne de secours 22 comprend :
- un mât 23 s'étendant selon un axe longitudinal 24 et relié par une première extrémité à la structure d'aéronef 21,
- une turbine 25 reliée à une deuxième extrémité du mât 23 et configurée pour pivoter autour d'un axe de rotation 26, l'axe de rotation 26 et l'axe longitudinal 24 étant non parallèles et non confondus, et
- un dispositif de blocage 29 de la rotation de la turbine 25 autour dudit axe de rotation 26.

La turbine 25 comprend un corps 30 monté en rotation sur le mât 23 autour dudit axe de rotation 26. Le corps 30 de la turbine 25 est par exemple couplé à un générateur électrique (non représenté), de sorte que la rotation du corps 30 de la turbine 25 autour de l'axe de rotation 26 entraîne la production d'énergie électrique par le générateur électrique. En variante, la turbine 25 peut produire de l'énergie hydraulique.

La turbine 25 comprend en outre une pale unique ou deux pales 32. La ou les pales 32 s'étendent radialement depuis le corps 30 de la turbine 25 entre un pied de pale 33 logé dans le corps 30 de la turbine 25 et une tête de pale 34 disposée à l'extérieur du corps 30.

Le pied de pale 33 de la ou de chacune des pales 32 s'étend le long d'un axe de pied de pale 35, disposé sensiblement perpendiculairement à l'axe de rotation 26 de la turbine 25. On entend par « sensiblement perpendiculaire » le fait que l'axe de pied de pale 35 est perpendiculaire à l'axe de rotation 26 à 2° près. Lorsque la turbine 25 comprend deux pales 32, leurs pieds de pale s'étendent le long du même axe de pied de pale 35.

Le pied de pale 33 de la ou de chacune des pales 32 est relié au corps 30 de la turbine 25 de sorte que la rotation de la ou des pales 32 autour de l'axe de rotation 26 entraîne la rotation du corps 30 de la turbine 25 autour dudit axe de rotation 26 et ainsi la production d'énergie électrique par le générateur électrique.

Le dispositif de blocage 29 est configuré pour bloquer la rotation du corps 30 de la turbine 25 autour de l'axe de rotation 26, lorsque l'éolienne de secours 22 se déplace entre la position rétractée et la position déployée, et pour libérer la rotation du corps 30 de la turbine 25 autour de l'axe de rotation 26, au moins lorsque l'éolienne de secours 22 est en position déployée. Le dispositif de blocage 29 peut également bloquer la rotation du corps 30 de la turbine 25 autour de l'axe de rotation 26, lorsque l'éolienne de secours 22 est en position rétractée. Lorsque le dispositif de blocage 29 bloque le corps 30 de la turbine 25 en rotation, la turbine 25 est en position dite bloquée.

Le dispositif de blocage 29 permet ainsi d'éviter que la ou les pales 32 se mettent en rotation, lorsque l'éolienne de secours 22 se déplace entre la position rétractée et la position déployée voire lorsque l'éolienne de secours 22 est en position rétractée, endommageant de ce fait l'aéronef, notamment la surface externe 201, et/ou la trappe 27.

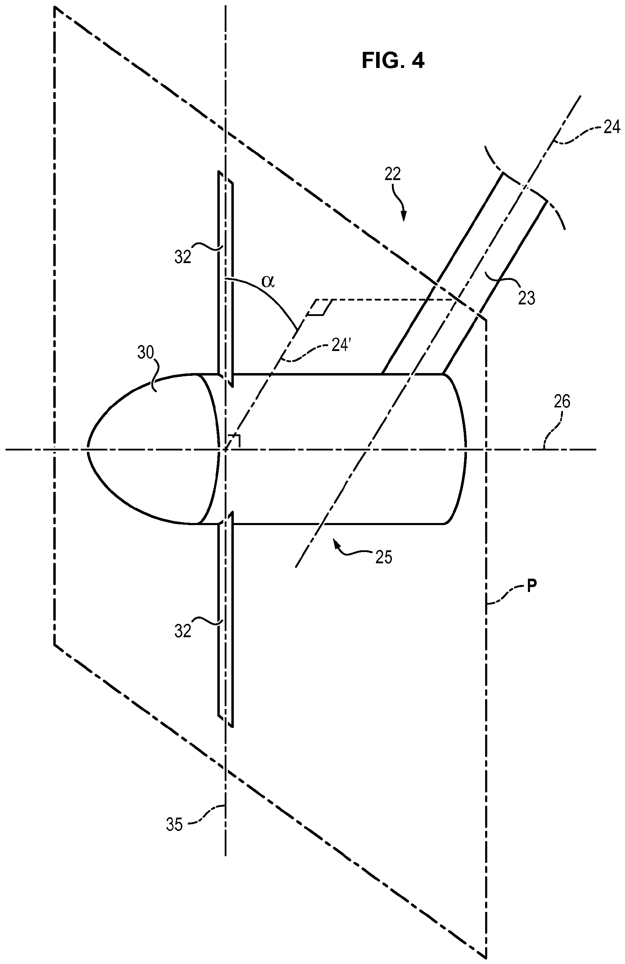

La turbine 25, en position bloquée par le dispositif de blocage 29, est schématiquement illustrée à la figure 4.

Plus précisément, lorsque la turbine 25 est en position bloquée, l'axe de pied de pale 35 forme un angle de blocage a, aigu et non nul, avec une projection orthogonale 24' de l'axe longitudinal 24 du mât 23 sur un plan P sensiblement perpendiculaire à l'axe de rotation 26 de la turbine 25 et dans lequel s'étend l'axe de pied de pale 35, de manière à réduire le volume balayé par l'éolienne de secours 22 lorsqu'elle se déplace entre la position rétractée et la position déployée. On entend « sensiblement perpendiculaire » le fait que le plan P est perpendiculaire à l'axe de rotation 26 à 2° près.

En effet, la Demanderesse s'est aperçue de manière surprenante qu'en bloquant la ou les pales 32 à l'angle de blocage α aigu et non nul, le volume balayé par l'éolienne de secours 22, lorsqu'elle se déplace entre la position rétractée et la position déployée, est réduit et que de ce fait l'intersection entre la surface externe 201 de l'aéronef et ce volume forme une surface moins importante que lorsque la ou les pales 32 sont bloquées à un angle de blocage nul. En conséquence, la section de l'ouverture ménagée dans la surface externe 201 de l'aéronef et donc la surface de la trappe 27 qui la referme, qui sont nécessaires au déploiement de l'éolienne de secours 22 vers l'extérieur de la surface externe 201 de l'aéronef, peuvent être réduites. Cela permet d'entraîner une réduction des efforts aérodynamiques qui s'appliquent sur la trappe 27, lors de son ouverture à l'extérieur de la surface externe 201 de l'aéronef, et ainsi d'éviter un surdimensionnement du système d'éolienne de secours 20 qui conduirait à une augmentation de la masse du système d'éolienne de secours 20.

On entend ici par « angle aigu et non nul », un angle supérieur ou égal à 10° et strictement inférieur à 90°.

L'angle de blocage α est un angle compris entre 10 et 45°.

De préférence, le dispositif de blocage 29 est configuré pour bloquer la rotation du corps 30 de la turbine 25 autour de l'axe de rotation 26, lorsque l'éolienne de secours 22 se déplace entre la position rétractée et une position dite intermédiaire, comprise entre la position rétractée et la position déployée, et pour libérer la rotation du corps 30 de la turbine 25 autour de l'axe de rotation 26, lorsque l'éolienne de secours 22 se déplace entre la position intermédiaire et la position déployée. Lorsque l'éolienne de secours 22 est en position intermédiaire, la turbine 25 est disposée à l'extérieur de la surface externe 201 de l'aéronef et est suffisamment éloignée de ladite surface externe 201 de l'aéronef et de la structure d'aéronef 21 pour éviter que la rotation des pales 32 ne les endommage. On entend par « suffisamment éloignée » le fait que la turbine 25, notamment les pales, est au moins éloignée de 25mm de la surface externe 201 de l'aéronef.

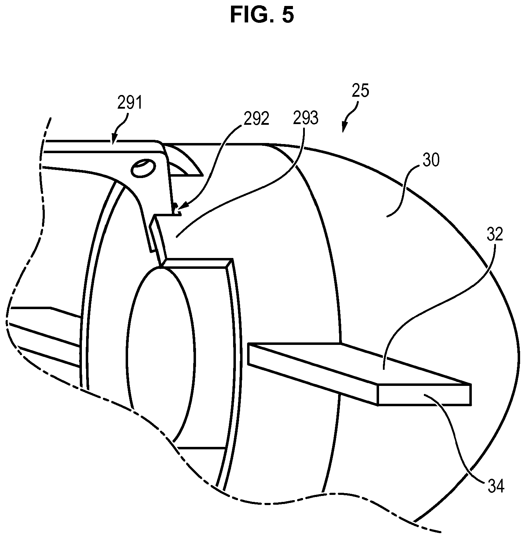

Le dispositif de blocage 29 comprend par exemple un doigt de verrouillage 291 et une encoche 292 ménagée dans le corps 30 de la turbine 25 et configurée pour recevoir le doigt de verrouillage 291, maintenant ainsi la turbine 25 en position bloquée. Le doigt de verrouillage 291 et l'encoche 292 sont configurés de telle sorte que l'axe de pied de pale 35 forme l'angle de blocage α avec la projection orthogonale 24' de l'axe longitudinal 24 du mât 23, lorsque le doigt de verrouillage 291 est engagé dans l'encoche 292. Le doigt de verrouillage 291 et l'encoche 292 en position bloquée de la turbine 25 sont représentés plus en détail à la figure 5.

Dans l'exemple illustré à la figure 3, le doigt de verrouillage 291 et l'encoche 292 sont tous deux compris dans le plan formé par l'axe de rotation 26 du corps 30 de la turbine 25 et l'axe longitudinal 24 du mât 23, lorsque la turbine 25 est en position bloquée. Dans cet exemple, l'encoche 292 est décalée angulairement de l'axe de pied de pale 35 autour de l'axe de rotation 26 d'un angle correspondant à l'angle de blocage a.

Dans l'exemple illustré à la figure 3, le corps 30 se prolonge autour de l'axe de rotation 26 par une plateforme 293 dans laquelle l'encoche 292 est réalisée.

Dans l'exemple illustré à la figure 3, le dispositif de blocage 29 comprend deux encoches 292 ménagées dans le corps 30 de la turbine 25 de manière diamétralement opposée. Une plateforme 293 peut alors être associée à chacune des encoches 292 comme cela est également illustré à la figure 3.

Le dispositif de blocage 29 comprend par exemple en outre un système de bielles 294 (figure 3) relié au doigt de verrouillage 291 et configuré pour désengager le doigt de verrouillage 291 de l'orifice 292, lorsqu'il est actionné et ainsi débloquer la rotation de la turbine 25. L'actionnement du système de bielles 294 est par exemple réalisé au moyen d'une butée 295 reliée à la structure d'avion 21. Un tel système de bielles 294 est déjà connu de l'homme du métier, il ne sera donc pas décrit plus en détail ici.

Le système d'éolienne de secours 20 a pour avantage de comprendre un dispositif de blocage 29 qui bloque la rotation de la turbine 25 dans une position telle que le volume balayé par l'éolienne de secours 22 lorsqu'elle est déployée vers l'extérieur de la surface externe 201 de l'aéronef est réduit, ce qui permet de réduire la surface de la trappe 27 et donc de limiter les efforts aérodynamiques qui s'appliquent sur ladite trappe 27 et qui doivent être repris par le système d'éolienne de secours 20, notamment le vérin d'actionnement 28. Ainsi, le système d'éolienne de secours 20 peut être dimensionné en tenant compte de ces efforts aérodynamiques plus faibles et la masse du système d'éolienne de secours 20 peut être réduite.

## Revendications

1. Système d'éolienne de secours (20) pour un aéronef comprenant une surface externe (201) dans laquelle une ouverture est ménagée, ledit système d'éolienne de secours (20) comprenant :
- une structure d'aéronef (21),
- une éolienne de secours (22) reliée à la structure d'aéronef (21) et configurée pour se déplacer par rapport à la structure d'aéronef (21) entre une position rétractée dans laquelle l'éolienne de secours (22) est logée à l'intérieur de la surface externe (201) de l'aéronef, et une position déployée, dans laquelle l'éolienne de secours (22) s'étend à l'extérieur de la surface externe (201) de l'aéronef, à travers l'ouverture ménagée dans la surface externe (201),
l'éolienne de secours (22) comprenant :
- un mât (23) s'étendant selon un axe longitudinal (24) et relié à la structure d'aéronef (21),
- une turbine (25) comprenant un corps (30) monté en rotation sur le mât (23) autour d'un axe de rotation (26), et une pale unique ou deux pales (32) s'étendant radialement depuis le corps (30) entre un pied de pale (33) logé dans le corps (30) et une tête de pale (34), le ou les pieds de pale (33) s'étendant le long d'un même axe de pied de pale (35), disposé sensiblement perpendiculairement à l'axe de rotation (26) de la turbine (25),
- un dispositif de blocage (29) configuré pour bloquer la rotation du corps (30) de la turbine (25) autour de l'axe de rotation (26), lorsque l'éolienne de secours (22) se déplace entre la position rétractée et la position déployée,
le système étant **caractérisé en ce que** le dispositif de blocage (29) est configuré pour bloquer la rotation du corps (30) de la turbine (25) autour de l'axe de rotation (26), dans une position telle que l'axe de pied de pale (35) forme un angle de blocage (a), aigu et non nul, avec une projection orthogonale (24') de l'axe longitudinal (24) du mât (23) sur un plan (P) sensiblement perpendiculaire à l'axe de rotation (26) de la turbine (25) et dans lequel s'étend l'axe de pied de pale (35), de manière à réduire le volume balayé par l'éolienne de secours (22) lorsqu'elle se déplace entre la position rétractée et la position déployée, l'angle de blocage (a) étant un angle compris entre 10 et 45°.

2. Système d'éolienne de secours (20) selon la revendication 1, comprenant une trappe (27) reliée à la structure d'aéronef (21) et configurée pour se déplacer par rapport à ladite structure d'aéronef (21) entre une position fermée dans laquelle la trappe (27) est destinée à obturer l'ouverture ménagée dans la surface externe (201) et l'éolienne de secours (22) est en position rétractée, et une position ouverte dans laquelle la trappe (27) est destinée à libérer ladite ouverture et à s'étendre à l'extérieur de la surface externe (201) de l'aéronef et l'éolienne de secours (22) est en position déployée.

3. Aéronef comprenant une surface externe (201) dans laquelle une ouverture est ménagée et **caractérisé en ce qu'**il comprend un système d'éolienne de secours (20) selon l'une quelconque des revendications 1 à 2, dans lequel la structure d'aéronef (21) est fixée à la surface externe (201).

4. Procédé de blocage en rotation d'une turbine (25) d'un système d'éolienne de secours (20) selon l'une quelconque des revendications 1 à 2, comprenant une
étape au cours de laquelle l'éolienne de secours (22) se déplace entre la position rétractée et la position déployée, et au cours de laquelle la rotation de la turbine (25) autour de l'axe de rotation (26) est bloquée dans une position telle que l'axe de pied de pale (35) forme un angle de blocage (a), aigu et non nul, avec une projection orthogonale (24') de l'axe longitudinal (24) du mât (23) sur un plan (P) sensiblement perpendiculaire à l'axe de rotation (26) de la turbine (25) et dans lequel s'étend l'axe de pied de pale (35), le volume balayé par l'éolienne de secours (22) lorsqu'elle se déplace entre la position rétractée et la position déployée étant ainsi réduit, l'angle de blocage (a) étant un angle compris entre 10 et 45°.

## Patentansprüche

1. Ram-Air-Turbinensystem (20) für ein Luftfahrzeug, das eine äußere Oberfläche (201) umfasst, in der eine Öffnung eingerichtet ist, wobei das Ram-Air-Turbinensystem (20) umfasst:
- eine Luftfahrzeugstruktur (21),
- eine Ram-Air-Turbine (22), die mit der Luftfahrzeugstruktur (21) verbunden ist und dazu ausgestaltet ist, sich in Bezug auf die Luftfahrzeugstruktur (21) zwischen einer eingezogenen Position, in der die Ram-Air-Turbine (22) im Inneren der äußeren Oberfläche (201) des Luftfahrzeugs untergebracht ist, und einer ausgefahrenen Position zu verlagern, in der die Ram-Air-Turbine (22) sich durch die in der äußeren Oberfläche (201) eingerichtete Öffnung außerhalb der äußeren Oberfläche (201) des Luftfahrzeugs erstreckt,
wobei die Ram-Air-Turbine (22) umfasst:
- einen Stiel (23), der sich entlang einer Längsachse (24) erstreckt und mit der Luftfahrzeugstruktur (21) verbunden ist,
- eine Turbine (25), die ein Gehäuse (30), das um eine Drehachse (26) herum an dem Stiel (23) drehbar gelagert ist, und ein einziges Blatt oder zwei Blätter (32), das bzw. die sich radial von dem Gehäuse (30) zwischen einer Blattwurzel (33), die in dem Gehäuse (30) untergebracht ist, und einem Blattkopf (34) erstreckt bzw. erstrecken, wobei der oder die Blattwurzeln (33) sich entlang einer selben Blattwurzelachse (35) erstreckt bzw. erstrecken, die im Wesentlichen senkrecht zur Drehachse (26) der Turbine (25) angeordnet ist,
- eine Blockiervorrichtung (29), die dazu ausgestaltet ist, die Drehung des Gehäuses (30) der Turbine (25) um die Drehachse (26) zu blockieren, wenn die Ram-Air-Turbine (22) sich zwischen der eingezogenen Position und der ausgefahrenen Position verlagert,
wobei das System **dadurch gekennzeichnet ist, dass** die Blockiervorrichtung (29) dazu ausgestaltet ist, die Drehung des Gehäuses (30) der Turbine (25) um die Drehachse (26) in einer Position zu blockieren, die derart ist, dass die Blattwurzelachse (35) mit einer orthogonalen Projektion (24') der Längsachse (24) des Stiels (23) auf einer Ebene (P), die im Wesentlichen senkrecht zur Drehachse (26) der Turbine (25) ist und in der sich die Blattwurzelachse (35) erstreckt, einen spitzen Blockierwinkel (α) von ungleich null bildet, derart, dass das von der Ram-Air-Turbine (22) bestrichene Volumen vermindert wird, wenn diese sich zwischen der eingezogenen Position und der ausgefahrenen Position verlagert, wobei der Blockierwinkel (α) ein Winkel zwischen 10 und 45° ist.

2. Ram-Air-Turbinensystem (20) nach Anspruch 1, die eine Klappe (27) umfasst, die mit der Luftfahrzeugstruktur (21) verbunden ist und dazu ausgestaltet ist, sich in Bezug auf die Luftfahrzeugstruktur (21) zwischen einer geschlossenen Position, in der die Klappe (27) dazu bestimmt ist, die in der äußeren Oberfläche (201) eingerichtete Öffnung zu verschließen, und die Ram-Air-Turbine (22) sich in der eingezogenen Position befindet, und einer geöffneten Position zu verlagern, in der die Klappe (27) dazu bestimmt ist, die Öffnung freizugeben und sich außerhalb der äußeren Oberfläche (201) des Luftfahrzeugs zu erstrecken, und die Ram-Air-Turbine (22) sich in der ausgefahrenen Position befindet.

3. Luftfahrzeug, das eine äußere Oberfläche (201) umfasst, in der eine Öffnung eingerichtet ist, und **dadurch gekennzeichnet, dass** es ein Ram-Air-Turbinensystem (20) nach einem der Ansprüche 1 bis 2 umfasst, wobei die Luftfahrzeugstruktur (21) an der äußeren Oberfläche (201) befestigt ist.

4. Verfahren zum Blockieren der Drehung einer Turbine (25) eines Ram-Air-Turbinensystems (20) nach einem der Ansprüche 1 bis 2, das einen Schritt umfasst, während dem die Ram-Air-Turbine (22) sich zwischen der eingezogenen Position und der ausgefahrenen Position verlagert und während dem die Drehung der Turbine (25) um die Drehachse (26) in einer Position blockiert wird, die derart ist, dass die Blattwurzelachse (35) mit einer orthogonalen Projektion (24') der Längsachse (24) des Stiels (23) auf einer Ebene (P), die im Wesentlichen senkrecht zur Drehachse (26) der Turbine (25) ist und in der die Blattwurzelachse (35) sich erstreckt, einen spitzen Blockierwinkel (α) von ungleich null bildet, wodurch das Volumen, das durch die Ram-Air-Turbine (22) bestrichen wird, wenn sie sich zwischen der eingezogenen Position und der ausgefahrenen Position verlagert, somit vermindert wird, wobei der Blockierwinkel (α) ein Winkel zwischen 10 und 45° ist.

## Claims

1. An emergency wind turbine system (20) for an aircraft comprising an external surface (201) in which an opening is provided, said emergency wind turbine system (20) comprising:
- an aircraft structure (21),
- an emergency wind turbine (22) connected to the aircraft structure (21) and configured to move with respect to the aircraft structure (21) between a retracted position in which the emergency wind turbine (22) is housed in the interior of the external surface (201) of the aircraft, and a deployed position, in which the emergency wind turbine (22) extends outside the external surface (201) of the aircraft, through the opening provided in the external surface (201),
the emergency wind turbine (22) comprising:
- a mast (23) extending along a longitudinal axis (24) and connected to the aircraft structure (21),
- a turbine (25) comprising a body (30) mounted in rotation on the mast (23) around an axis of rotation (26), and a single blade or two blades (32) extending radially from the body (30) between a blade root (33) housed in the body (30) and a blade tip (34), the blade root(s) (33) extending along a same blade root axis (35), disposed substantially perpendicular to the axis of rotation (26) of the turbine (25),
- a blocking device (29) configured to block the rotation of the body (30) of the turbine (25) around the axis of rotation (26), when the emergency wind turbine (22) moves between the retracted position and the deployed position,
the system being **characterized in that** the blocking device (29) is configured to block the rotation of the body (30) of the turbine (25) around the axis of rotation (26), in a position such that the blade root axis (35) forms a blocking angle (a), acute and non-zero, with an orthogonal projection (24') of the longitudinal axis (24) of the mast (23) on a plane (P) substantially perpendicular to the axis of rotation (26) of the turbine (25) and in which the blade root axis (35) extends, so as to reduce the volume swept by the emergency wind turbine (22) when it moves between the retracted position and the deployed position, the blocking angle (a) being an angle comprised between 10 and 45°.

2. The emergency wind turbine system (20) according to claim 1, comprising a hatch (27) connected to the aircraft structure (21) and configured to move with respect to said aircraft structure (21) between a closed position in which the hatch (27) is designed to block the opening provided in the external surface (201) and the emergency wind turbine (22) is in the retracted position, and an open position in which the hatch (27) is designed to free said opening and to extend to the outside of the external surface (201) of the aircraft and the emergency wind turbine (22) is in the deployed position.

3. An aircraft comprising an external surface (201) in which an opening is provided and **characterized in that** it comprises an emergency wind turbine system (20) according to any one of claims 1 to 2, wherein the aircraft structure (21) is attached to the external surface (201).

4. A method for blocking in rotation a turbine (25) of an emergency wind turbine system (20) according to any one of claims 1 to 2, comprising a step during which the emergency wind turbine (22) moves between the retracted position and the deployed position, and during which the rotation of the turbine (25) around the axis of rotation (26) is blocked in a position such that the blade root axis (35) forms a blocking angle (a), acute and non-zero, with an orthogonal projection (24') of the longitudinal axis (24) of the mast (23) on a plane (P) substantially perpendicular to the axis of rotation (26) of the turbine (25) and into which the blade root axis (35) extends, the volume swept by the emergency wind turbine (22) when it moves between the retracted position and the deployed position being thus reduced, the blocking angle (a) being an angle comprised between 10 and 45°.
